Europäisches Patentamt

European Patent Office

Office européen des brevets

(11) Veröffentlichungsnummer: **0 337 293 B1**

## EUROPÄISCHE PATENTSCHRIFT

(45) Veröffentlichungstag der Patentschrift: **28.10.92**

(51) Int. Cl.⁵: **G01F 23/28**, G01S 15/52

(21) Anmeldenummer: **89106048.5**

(22) Anmeldetag: **06.04.89**

(54) **Füllstandsmessgerät.**

(30) Priorität: **13.04.88 DE 3812293**

(43) Veröffentlichungstag der Anmeldung:
**18.10.89 Patentblatt 89/42**

(45) Bekanntmachung des Hinweises auf die
Patenterteilung:
**28.10.92 Patentblatt 92/44**

(84) Benannte Vertragsstaaten:
**BE CH DE ES FR GB IT LI NL SE**

(56) Entgegenhaltungen:
**EP-A- 0 093 057**
**DE-B- 1 623 971**
**US-A- 4 700 569**

(73) Patentinhaber: **Endress u. Hauser GmbH u.
Co.
Hauptstrasse 1
W-7864 Maulburg(DE)**

(72) Erfinder: **Lau, Jürgen,
Baders Garten 5,
W-7858 Weil am Rhein,(DE)**

(74) Vertreter: **Leiser, Gottfried, Dipl.-Ing. et al
Patentanwälte Prinz, Leiser, Bunke & Partner
Manzingerweg 7
W-8000 München 60(DE)**

## Beschreibung

Die Erfindung betrifft ein Füllstandsmeßgerät zur Messung des Füllstands in einem Behälter mit einer Sende- und Empfangsanordnung, die Schall- oder Ultraschallimpulse auf die Füllgutoberfläche richtet und die von der Füllgutoberfläche reflektierten Rückstreuimpulse empfängt und in elektrische Empfangssignale umwandelt, und mit einer an die Sende- und Empfangsanordnung angeschlossenen Auswerteschaltung, die in einem Signalverarbeitungsweg die folgenden Elemente aufweist:

- eine Hüllkurvenschaltung, die ein der Hüllkurve der Empfangssignale entsprechendes Hüllkurvensignal erzeugt,
- einen Analog-Digital-Wandler, der das Hüllkurvensignal periodisch abtastet und diese Abtastwerte digitalisiert,
- eine Signalverarbeitungsanordnung, die einen Speicher enthält, in welchem die digitalisierten Abtastwerte zur Schaffung eines entfernungs- oder laufzeitabhängigen Amplitudenprofils der Meßstrecke abgelegt werden und die das Amplitudenprofil zur Bestimmung der Laufzeit des wahrscheinlichsten Nutz-Echosignals auswertet.

Bei einem aus der US-A-4 700 569 bekannten Füllstandsmeßgerät wird das Hüllkurvensignal in einem ersten Abschnitt jeder Sendeperiode zu der Signalverarbeitungsanordnung übertragen, und in einem zweiten Abschnitt jeder Sendeperiode wird wenigstens ein weiteres niederfrequentes elektrisches Signal übertragen, das für einen Parameter des Ausbreitungsmediums der Schall- oder Ultraschallwellen kennzeichnend ist. Ein wesentlicher Vorteil der Erzeugung des Hüllkurvensignals besteht darin, daß das Amplitudenprofil der Meßstrecke erhalten bleibt, ohne daß es erforderlich ist, Signale mit der hohen Frequenz der Ultraschallimpulse zu übertragen und zu verarbeiten. Aus dem Amplitudenprofil können Informationen über weitere Parameter gewonnen werden, die für die präzise Bestimmung der Laufzeit der Schall- oder Ultraschallwellen im Behälter maßgeblich sind. Beispielsweise können durch die Auswertung des im Speicher abgelegten digitalisierten Amplitudenprofils Stör-Echosignale, insbesondere solche, die von festen Einbauten im Behälter stammen oder durch Mehrfachreflexionen an der Füllgutoberfläche verursacht werden, vom Nutz-Echosignal unterschieden werden, so daß Fehlmessungen infolge solcher Stör-Echosignale weitgehend vermieden werden. Es hat sich jedoch gezeigt, daß die Laufzeitmessung immer noch durch Stör-Echosignale beeinträchtigt werden kann, die von Hindernissen stammen, die sich relativ zum Füllstandsmeßgerät bewegen, da solche Stör-Echosignale völlig unregelmäßig mit ständig wechselnden Laufzeiten auftreten. Bei den Messungen in Behältern entstehen solche Stör-Echosignale insbesondere durch Reflexionen am Befüllstrom, wenn Füllgut gleichzeitig zur Messung von oben in den Behälter eingefüllt wird.

Aus der DD-A-131 671 ist es bekannt, die von beweglichen Hindernissen stammenden Echosignale aufgrund der durch den Dopplereffekt verursachten Frequenzverschiebung von den Festziel-Echosignalen zu unterscheiden. Zu diesem Zweck müssen die Empfangssignale durch eine Frequenzerkennungsstufe geschickt werden. Am Ausgang dieser Frequenzerkennungsstufe ist jedoch keine Amplitudeninformation, sondern nur noch eine Frequenzinformation vorhanden. Diese Maßnahme ist daher nicht anwendbar, wenn das Amplitudenprofil der Meßstrecke gespeichert und ausgewertet werden soll.

Aufgabe der Erfindung ist die Schaffung eines Füllstandsmeßgeräts, bei welchem die Laufzeitmessung durch Stör-Echosignale, die von beweglichen Hindernissen stammen, nicht beeinträchtigt wird, jedoch die Amplitudeninformation der von unbeweglichen Hindernissen stammenden Echosignale erhalten bleibt.

Nach der Erfindung wird diese Aufgabe dadurch gelöst, daß in der Auswerteschaltung parallel zu dem die Hüllkurvenschaltung enthaltenden Signalverarbeitungsweg ein Frequenzdetektor vorgesehen ist, der eine Übereinstimmung der Frequenz der Empfangssignale mit der Sendefrequenz feststellt, und daß im Signalverarbeitungsweg eine vom Ausgangssignal des Frequenzdetektors gesteuerte Torschaltung liegt, die in Abhängigkeit von dem Ergebnis der Frequenzdetektion des Frequenzdetektors nur für diejenigen Empfangssignale geöffnet wird, deren Frequenz der Sendefrequenz entspricht.

Bei dem nach der Erfindung ausgeführten Füllstandsmeßgerät werden alle Empfangssignale, deren Frequenz nicht der Sendefrequenz entspricht, von der Digitalisierung und weiteren Verarbeitung ausgeschlossen. Hierzu gehören infolge der Dopplerfrequenzverschiebung alle Empfangssignale, die durch Reflexionen an beweglichen Hindernissen verursacht werden. Dagegen werden alle Empfangssignale, deren Frequenz mit der Sendefrequenz übereinstimmt, unverändert zur Digitalisierung und weiteren Signalverarbeitung weitergeleitet. Im Speicher wird daher das vollständige Amplitudenprofil dieser frequenzgleichen Empfangssignale abgelegt, so daß es für die Auswertung bei der Erkennung des wahrscheinlichsten Nutz-Echosignals und bei der Bestimmung der Laufzeit zur Verfügung steht.

Vorteilhafte Ausgestaltungen und Weiterbildungen der Erfindung sind in den Unteransprüchen gekennzeichnet.

Ein Ausführungsbeispiel der Erfindung wird anhand der Zeichnung erläutert. In der Zeichnung zeigen:

Fig. 1 eine schematische Darstellung der Messung in einem Behälter mit Hilfe eines Füllstandsmeßgeräts,

Fig. 2 das Blockschaltbild der Elektronik des Füllstandsmeßgeräts von Fig. 1 gemäß einer Ausführungsform der Erfindung und

Fig. 3 Zeitdiagramme von Signalen, die in der Elektronik von Fig. 2 auftreten können.

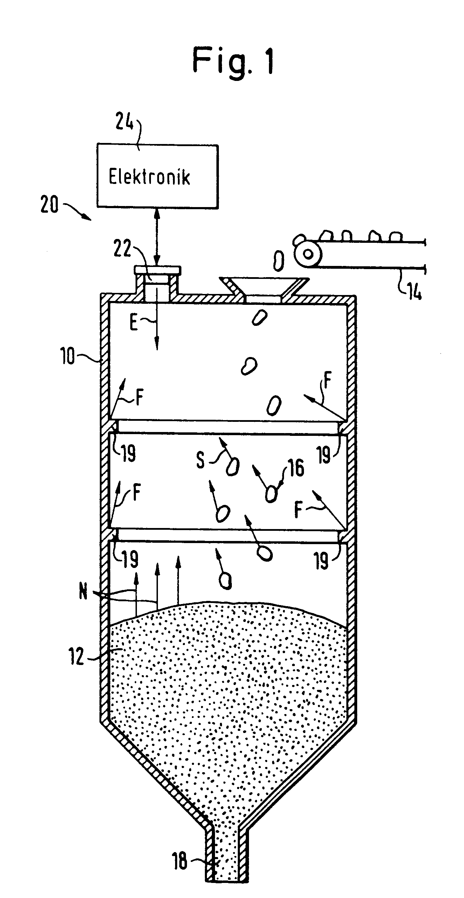

Fig. 1 zeigt einen Behälter 10, der mit einem schüttfähigen Füllgut 12 teilweise gefüllt ist. Das Füllgut 12 kann pulverförmig oder körnig sein oder aus noch gröberen Stücken bestehen. Es wird von oben in den Behälter 10 eingebracht, beispielsweise mittels eines Förderbandes 14, von dem es als Befüllstrom 16 in den Behälter fällt, und es kann durch eine steuerbare Entnahmeöffnung 18 an der tiefsten Stelle des Behälters 10 entnommen werden. Ferner sind im Behälter 10 einige feste Hindernisse 19 dargestellt.

Zur kontinuierlichen Messung ist über dem Behälter 10 ein Füllstandsmeßgerät 20 angebracht, das Schall- oder Ultraschallimpulse nach unten in den Behälter 10 schickt und die an der Oberfläche des Füllguts 12 reflektierten Echoimpulse empfängt. Der Zeitabstand zwischen der Aussendung eines Schall- oder Ultraschallimpulses und dem Empfang eines Echoimpulses entspricht der Schallaufzeit vom Füllstandsmeßgerät 20 bis zur Füllgutoberfläche und wieder zurück zum Füllstandsmeßgerät. Bei bekannter Schallgeschwindigkeit kann daraus der Abstand der Füllgutoberfläche vom Füllstandsmeßgerät und somit der Füllstand im Behälter 10 bestimmt werden.

Das Füllstandsmeßgerät 20 besteht in der üblichen Weise aus einem elektroakustischen Wandler 22 und der zugehörigen Elektronik 24. Der elektroakustische Wandler 22 dient abwechselnd als Sendewandler zur Aussendung von Schall- oder Ultraschall-Sendeimpulsen und in jeder Pause zwischen zwei Sendeimpulsen als Empfangswandler, der die reflektierten Echoimpulse in elektrische Empfangssignale umwandelt. Der Zeitabstand zwischen zwei aufeinanderfolgenden Sendeimpulsen ist größer als die größte vorkommende Laufzeit eines Schall-oder Ultraschall-Impulses vom Füllstandsmeßgerät bis zur Füllgutoberfläche und wieder zurück. Die Elektronik 24 enthält Schaltungen, die den elektroakustischen Wandler 22 in periodischen Zeitabständen zur Aussendung der Sendeimpulse erregen, Schaltungen zur Verstärkung und Verarbeitung der vom elektroakustischen Wandler 22 gelieferten elektrischen Empfangssignale und Schaltungen zur Ermittlung des gesuchten Füllstands aus dem Zeitabstand zwischen den Sendeimpulsen und den empfangenen Echoimpulsen. Im allgemeinen ist es erwünscht, nicht nur die Laufzeit der Schall- oder Ultraschallimpulse zu ermitteln, sondern auch die Form und Amplitude der vom elektroakustischen Wandler 22 gelieferten Empfangssignale auszuwerten, weil daraus Informationen über die Verhältnisse im Behälter 10 gewonnen werden können, die zur Erkennung des wahrscheinlichsten Nutz-Echosignals und zur präzisen Laufzeitmessung herangezogen werden können. Diese zusätzlichen Informationen ergeben sich aus der Hüllkurve bzw. dem Zeit-Amplituden-Profil der vom elektroakustischen Wandler 22 gelieferten Empfangssignale.

In an sich bekannter Weise kann der elektroakustische Wandler 22, der abwechselnd als Sendewandler und als Empfangswandler arbeitet, auch durch zwei getrennte Wandler ersetzt werden, von denen einer ausschließlich als Sendewandler und der andere ausschließlich als Empfangswandler dient.

Ein wesentliches Problem bei dieser auf dem Echolotprinzip beruhenden Füllstandsmessung besteht darin, daß außer den Nutz-Echoimpulsen, die an der Oberfläche des Füllguts reflektiert werden, wie in Fig. 1 durch die Pfeile N angedeutet ist, auch Stör-Echoimpulse auftreten können, die von anderen Hindernissen im Behälter reflektiert werden und sich den Nutz-Echoimpulsen überlagern. Während Stör-Echoimpulse, die von den festen Hindernissen 19 im Behälter stammen, wie durch die Pfeile F angedeutet ist, stets mit gleicher Laufzeit auftreten und daher durch die Auswertung des Amplitudenprofils der Empfangssignale leicht erkannt und unschädlich gemacht werden können, ergeben insbesondere die Echosignale, die an den in den Behälter fallenden Füllgutteilchen des Befüllstroms 16 reflektiert werden, wie in Fig. 1 durch die Pfeile S angedeutet ist, eine massive Störung der Füllstandsmessung. Diese Stör-Echosignale S treten mit stets wechselnden Laufzeiten im gesamten Laufzeitbereich auf.

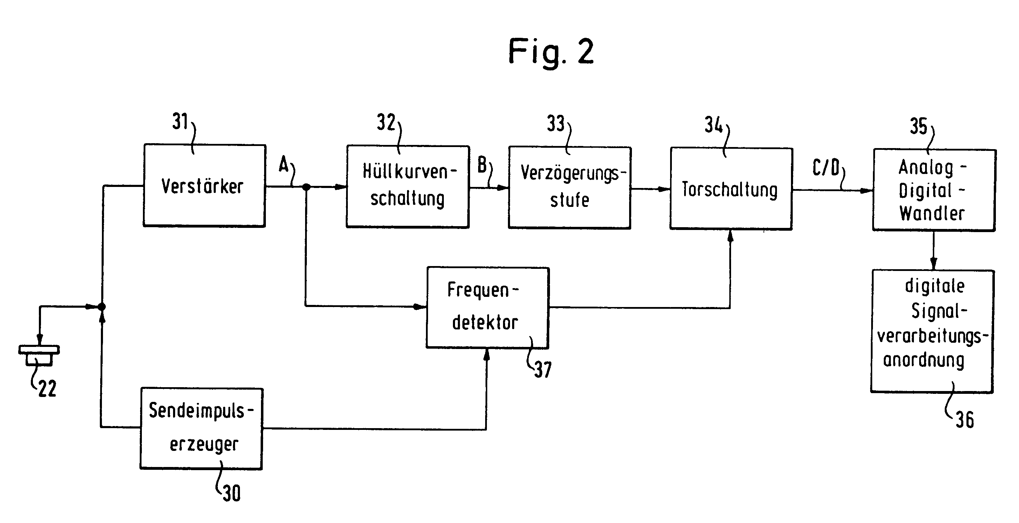

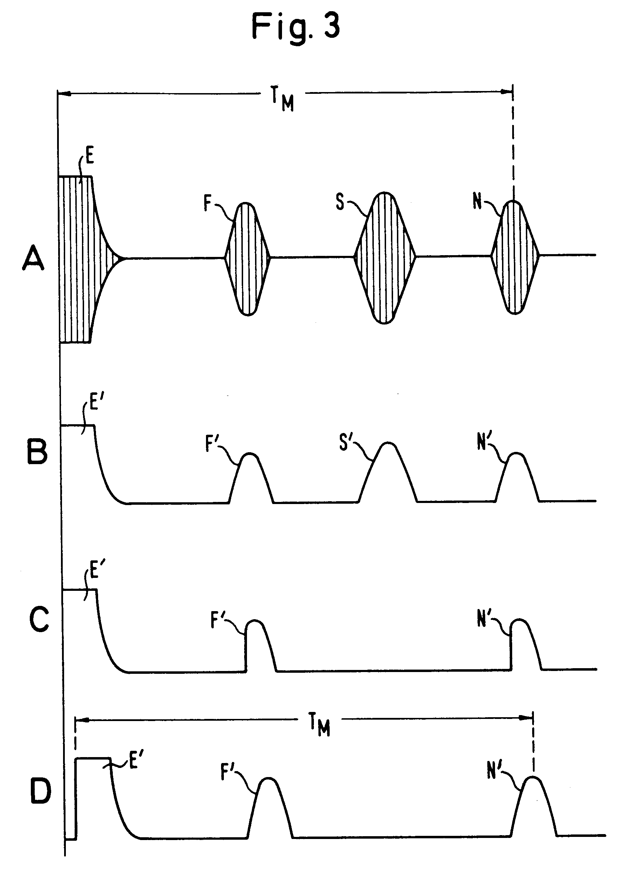

Fig. 2 zeigt das Blockschaltbild einer Ausführungsform der Elektronik 24, die es ermöglicht, die vom Befüllstrom 16 stammenden Stör-Echoimpulse S unschädlich zu machen, ohne daß die in der Hüllkurve bzw. dem Zeit-Amplituden-Profil der Empfangssignale enthaltenen Informationen verlorengehen. Die Diagramme A bis D von Fig. 3 zeigen den zeitlichen Verlauf von verschiedenen Signalen, die an den mit den gleichen Buchstaben bezeichneten Schaltungspunkten der Schaltung von Fig. 2 auftreten können.

In Fig. 2 ist wieder der elektroakustische Wandler 22 dargestellt, der mit dem Ausgang eines Sendeimpulserzeugers 30 verbunden ist. Der Sendeimpulserzeuger 30 schickt in periodischen Zeitabständen jeweils einen impulsförmigen elektrischen Schwingungszug mit der Frequenz des auszusendenden Schall- oder Ultraschallimpulses als Erregungsimpuls zu dem elektroakustischen Wandler 22, der dadurch zur Aussendung eines Schall- oder Ultraschall-Sendeimpulses angeregt wird. Die Dauer des Schall- oder Ultraschall-Sendeimpulses ist klein gegen die Dauer der Sendeperioden, die durch die periodischen Zeitabstände zwischen den aufeinanderfolgenden Sendeimpulsen bestimmt ist.

Der elektroakustische Wandler 22 ist ferner mit dem Eingang eines Verstärkers 31 verbunden, der die vom Wandler 22 kommenden elektrischen Signale verstärkt. Zu diesen Signalen gehören zunächst Impulse, die den Schall- oder Ultraschall-Sendeimpulsen entsprechen. Nach dem Abklingen jedes Sendeimpulses arbeitet der elektroakustische Wandler 22 als Empfangswandler, der die eintreffenden Schall- oder Ultraschall-Echoimpulse in elektrische Empfangssignale umwandelt, die ebenfalls dem Verstärker 31 zugeführt werden. Da der Pegel der Empfangssignale klein gegen den Pegel der Sendeimpulse ist, werden die den Sendeimpulsen entsprechenden elektrischen Signale durch geeignete, an sich bekannte Maßnahmen begrenzt, um eine Übersteuerung des Verstärkers 31 zu vermeiden.

Der Verstärker 31 gibt somit an seinem Ausgang in jeder Sendeperiode ein Signal ab, wie es beispielsweise im Diagramm A von Fig. 3 dargestellt ist. Der Beginn der Meßperiode ist durch den Sendeimpuls E bestimmt, dessen Amplitude begrenzt ist. Während der vom Sendeimpulserzeuger 30 kommende elektrische Erregungsimpuls ein Rechteckimpuls ist, erscheint am Eingang des Verstärkers 31 ein exponentiell abklingender Impuls, da der elektroakustische Wandler 22 nach dem Aufhören des Erregungsimpulses noch nachschwingt.

In einem Zeitabstand $T_M$, der durch den Abstand der Füllgutoberfläche vom elektroakustischen Wandler 22 bestimmt ist, erscheint nach dem Ende des Sendeimpulses E ein Nutz-Echoimpuls N, der dem an der Füllgutoberfläche reflektierten Schall- oder Ultraschall-Echoimpuls entspricht. Dieser Nutz-Echoimpuls N ist ein Schwingungszug mit der Sendefrequenz der Schall- oder Ultraschallwelle und mit einer Hüllkurve, die gegenüber der ursprünglichen Rechteckform des Sendeimpulses mehr oder weniger stark verschliffen und verformt ist. Zwischen dem Sendeimpuls E und dem Nutz-Echoimpuls N ist im Diagramm A von Fig. 3 ein Stör-Echoimpuls S dargestellt, der von dem in den Behälter fallenden Befüllstrom 16 reflektiert worden ist, sowie ein Stör-Echoimpuls F, der an einem festen Hindernis 19 im Behälter 10 reflektiert worden ist. Natürlich können in diesem Bereich der Sendeperiode noch zahlreiche weitere Stör-Echoimpulse S dieser Art vorhanden sein, die mit unterschiedlichen Laufzeiten von verschiedenen Teilen des Befüllstroms 16 stammen, sowie Stör-Echoimpulse F, die an festen Hindernissen im Behälter reflektiert worden sind. Infolge von Mehrfach-Reflexionen können Stör-Echoimpulse auch hinter dem Nutz-Echoimpuls N erscheinen.

Dem Verstärker 31 ist eine Hüllkurvenschaltung 32 nachgeschaltet, die so ausgebildet ist, daß sie an ihrem Ausgang ein Signal abgibt, das der Hüllkurve ihres Eingangssignals entspricht. Hüllkurvenschaltungen, die diese Funktion erfüllen, sind allgemein bekannt. Im einfachsten Fall kann die Hüllkurvenschaltung ein Amplitudendemodulator sein, der die amplitudenmodulierte Trägerschwingung mit der Frequenz der Schall- oder Ultraschallwelle gleichrichtet und durch Tiefpaßfilterung unterdrückt. Wenn dem Eingang der Hüllkurvenschaltung 32 das im Diagramm A dargestellte Signal zugeführt wird, erscheint dann an ihrem Ausgang das niederfrequente Signal des Diagramms B, das die Hüllkurve $E'$ des Sendeimpulses E, die Hüllkurve $N'$ des Nutz-Echoimpulses N und die Hüllkurven $F'$ und $S'$ der Stör-Echoimpulse F bzw. S enthält. Ganz allgemein stellt das Hüllkurvensignal das Zeit-Amplituden-Profil des Ausgangssignals des elektroakustischen Wandlers 22 dar, und es enthält noch die gesamte Amplitudeninformation des Empfangssignals. Da das Hüllkurvensignal niederfrequent ist, kann es leichter verarbeitet werden und auch mit geringerem Aufwand über größere Strecken übertragen werden, beispielsweise zu einem Auswertegerät, das an einer vom Behälter 10 entfernten Stelle angeordnet ist.

Das vom Ausgang der Hüllkurvenschaltung 32 gelieferte Hüllkurvensignal wird in der Schaltung von Fig. 2 über eine Verzögerungsstufe 33 und eine Torschaltung 34 einem Analog-Digital-Wandler 35 zugeführt. Im Analog-Digital-Wandler 35 wird das Hüllkurvensignal periodisch abgetastet, und jeder Abtastwert wird in ein digitales Signal in Form einer Codegruppe mit einer der gewünschten Auflösung entsprechenden Stellenzahl umgewandelt.

Der Ausgang des Analog-Digital-Wandlers 35 ist mit einer digitalen Signalverarbeitungsanordnung 36 verbunden, die beispielsweise durch einen geeignet programmierten Mikrocomputer gebildet sein kann. Die digitale Signalverarbeitungsanordnung 36 enthält einen Speicher, in welchem die vom Analog-Digital-Wandler 35 gelieferten Codegruppen, die das digitalisierte Empfangssignal von wenigstens einer Sendeperiode, vorzugsweise aber von mehreren aufeinanderfolgenden Sendeperioden repräsentieren, abgelegt werden, so daß sich im Speicher ein entfernungs- oder laufzeitabhängiges Amplitudenprofil der Meßstrecke befindet. Dieses Amplitudenprofil wird dann nach Erfahrungswerten statistisch geglättet und analysiert. Aufgrund dieser Analyse werden die von festen Hindernissen 19 stammenden Störechos F erkannt und der Echoimpuls bestimmt, der mit größter Wahrscheinlichkeit den an der Füllgutoberfläche reflektierten Nutz-Echoimpuls darstellt, und schließlich wird die Laufzeit dieses wahrscheinlichsten Nutz-Echoimpulses zur Ermittlung des Füllstands bestimmt. Durch diese Echoauswertung lassen sich nachteilige Effekte, die bei bestimmten Empfangsverhältnissen auftreten, wie Doppel- und Mehrfachreflexionen, Störechos von Einbauten im Behälter oder dergleichen, besser beherrschen. Jedoch kann die Messung bei massiven Störungen durch die vom Befüllstrom verursachten unregelmäßigen Stör-Echoimpulse S noch sehr erschwert oder sogar vereitelt werden.

Zur Vermeidung solcher Störungen durch die vom Befüllstrom stammenden Stör-Echoimpulse enthält die Schaltung von Fig. 2 einen Frequenzdetektor 37, der parallel zu dem die Hüllkurvenschaltung 32 enthaltenden Signalverarbeitungsweg an den Ausgang des Verstärkers 31 angeschlossen ist. Ein zweiter Eingang des Frequenzdetektors 37 ist mit dem Sendeimpulserzeuger 30 verbunden, und der Ausgang des Frequenzdetektors 37 ist mit dem Steuereingang der Torschaltung 34 verbunden.

Der Frequenzdetektor 37 empfängt vom Sendeimpulserzeuger ein Signal mit der Frequenz der Sendeimpulse, und er vergleicht ständig die Frequenz des am Ausgang des Verstärkers 31 erscheinenden Empfangssignals mit dieser Sendefrequenz. Wenn der Frequenzdetektor 37 eine Übereinstimmung der Frequenz des Empfangssignals mit der Sendefrequenz feststellt, liefert er zum Steuereingang der Torschaltung 34 ein Steuersignal, das die Torschaltung 34 öffnet, so daß diese das über die Verzögerungsstufe 33 übertragene Hüllkurvensignal zum Analog-Digital-Wandler 35 durchläßt. Wenn dagegen keine Übereinstimmung zwischen der Frequenz des Empfangssignals und der Sendefrequenz besteht, wird die Torschaltung 34 durch das Ausgangssignal des Frequenzdetektors 37 gesperrt.

Der Frequenzdetektor 37 ergibt in Verbindung mit der Torschaltung 34 die Wirkung, daß die Hüllkurvensignale $S'$ der vom Befüllstrom 16 stammenden Stör-Echoimpulse S nicht zum Analog-Digital-Wandler gelangen. Dabei wird die Tatsache ausgenutzt, daß sich der Befüllstrom 16 relativ zum Echolotgerät 20 bewegt, so daß die am Befüllstrom 16 reflektierten Echoimpulse infolge des Dopplereffekts eine Frequenzverschiebung gegenüber der Sendefrequenz erleiden. Der Frequenzdetektor 37 muß natürlich so ausgebildet sein, daß er auf diese geringfügige Doppler-Frequenzverschiebung anspricht und das am Ausgang abgegebene Steuersignal so ändert, daß die Torschaltung 34 gesperrt wird.

Dagegen weisen die an festen Hindernissen und an der Füllgutoberfläche reflektierten Echoimpulse F, N die Sendefrequenz auf, da diese Reflexionsebenen relativ zum Füllstandsmeßgerät in Ruhe sind. Die diesen Echoimpulsen entsprechenden Hüllkurvensignale $F'$, $N'$ werden daher von der Torschaltung 34 zum Analog-Digital-Wandler 35 durchgelassen.

Das Diagramm C von Fig. 3 zeigt das Ausgangssignal der Torschaltung 34, wenn angenommen wird, daß die Verzögerungsstufe 33 nicht vorhanden ist. In diesem Ausgangssignal ist die Hüllkurve $S'$ des Störechoimpulses S vollständig unterdrückt. Allerdings benötigt der Frequenzdetektor 37 eine gewisse Zeit, bis er die Frequenzübereinstimmung seiner beiden Eingangssignale mit ausreichender Genauigkeit festgestellt hat, da er mehrere Schwingungen vergleichen muß. Das Öffnen der Torschaltung 34 erfolgt daher erst eine gewisse Zeit nach dem Beginn des Nutz-Echoimpulses, so daß der Anfangsteil der Hüllkurve $N'$ abgeschnitten wird. Dies kann zu einer Verfälschung der Amplitudeninformation führen.

Diese Erscheinung wird durch die Verzögungsstufe 33 beseitigt. Sie erteilt dem Hüllkurvensignal eine Verzögerung, die der vom Frequenzdetektor 37 für die Frequenzerkennung benötigten Zeit entspricht. Dadurch wird erreicht, daß die Torschaltung 34 bereits geöffnet ist, wenn der Anfang der Hüllkurve $N'$ des Nutz-Echoimpulses N an der Torschaltung eintrifft. Das Ausgangssignal der Torschaltung 34 entspricht dann dem Diagramm D von Fig. 3. Es enthält die vollständige Hüllkurve des Nutz-Echoimpulses N sowie auch die Hüllkurven der Stör-Echoimpulse F und anderer Komponenten des Empfangssignals, die die Sendefrequenz aufweisen, während die Hüllkurven aller Signalkomponenten, deren Frequenz von der Sendefrequenz abweicht, unterdrückt sind.

Im Speicher der digitalen Signalverarbeitungsanordnung 36 ist dann nicht das Zeit-Amplituden-Profil des gesamten Empfangssignals gespeichert, sondern das Zeit-Amplituden-Profil der Echosignale, die die ursprüngliche Sendefrequenz aufweisen.

Die durch die Verzögerungsstufe 33 bewirkte Signalverzögerung ist ohne Auswirkung auf die Laufzeitmessung, da das dem Sendeimpuls E entsprechende Hüllkurvensignal und das dem Nutz-Echoimpuls N entsprechende Hüllkurvensignal in gleicher Weise verzögert werden, so daß der für die Laufzeitmessung maßgebliche Zeitabstand $T_M$ unverändert bleibt.

Verschiedene Abänderungen der beschriebenen Schaltung sind für den Fachmann offensichtlich. Beispielsweise könnnten die Verzögerungsstufe 33 und die Torschaltung 34 anstatt hinter der Hüllkurvenschaltung 32 auch vor dieser angeordnet werden.

**Patentansprüche**

1. Füllstandsmeßgerät (20) zur Messung des Füllstands in einem Behälter (10) mit einer Sende- und Empfangsanordnung, die Schall- oder Ultraschallimpulse auf die Füllgutoberfläche richtet und die von der Füllgutoberfläche reflektierten Rückstreuimpulse (N) empfängt und in elektrische Empfangssignale umwandelt, und mit einer an die Sende- und Empfangsanordnung angeschlossenen Auswerteschaltung, die in einem Signalverarbeitungsweg (32-36) die folgenden Elemente aufweist:
   - eine Hüllkurvenschaltung (32), die ein der Hüllkurve der Empfangssignale entsprechendes Hüllkurvensignal erzeugt,
   - einen Analog-Digital-Wandler (35), der das Hüllkurvensignal periodisch abtastet und diese Abtastwerte digitalisiert,
   - eine Signalverarbeitungsanordnung (36), die einen Speicher enthält, in welchem die digitalisierten Abtastwerte zur Schaffung eines entfernungs- oder laufzeitabhängigen Amplitudenprofils der Meßstrecke abgelegt werden und die das Amplitudenprofil zur Bestimmung der Laufzeit des wahrscheinlichsten Nutz-Echosignals auswertet,
   dadurch gekennzeichnet,
   - daß in der Auswerteschaltung parallel zu dem die Hüllkurvenschaltung (32) enthaltenden Signalverarbeitungsweg ein Frequenzdetektor (37) vorgesehen ist, der eine Übereinstimmung der Frequenz der Empfangssignale mit der Sendefrequenz feststellt,
   - daß im Signalverarbeitungsweg eine vom Ausgangssignal des Frequenzdetektors (37) gesteuerte Torschaltung (34) liegt, die in Abhängigkeit von dem Ergebnis der Frequenzdetektion des Frequenzdetektors (37) nur für diejenigen Empfangssignale geöffnet wird, deren Frequenz der Sendefrequenz entspricht.

2. Füllstandsmeßgerät nach Anspruch 1, dadurch gekennzeichnet, daß im Signalverarbeitungsweg hinter dem Anschlußpunkt des Frequenzdetektors (37) und vor der Torschaltung (34) eine Verzögerungsschaltung (33) eingefügt ist.

3. Füllstandsmeßgerät nach Anspruch 2, dadurch gekennzeichnet, daß die Torschaltung (34) im Signalverarbeitungsweg hinter der Hüllkurvenschaltung (32) liegt.

**Claims**

1. Filling level meter (20) for measuring the filling level in a container (10) comprising a transmitting and receiving arrangement which directs sonic or ultrasonic pulses onto the filling material surface and which receives backscattered pulses (N) reflected from the filling material surface and converts said pulses to electrical reception signals, and an evaluating circuit which is connected to the transmitting and receiving arrangement and which in a signal processing path (32-36) comprises the following elements:
   - an envelope circuit (32) generating an envelope signal corresponding to the envelope of the reception signals,
   - an analog-digital-converter (35) periodically sampling the envelope signal and digitizing the sampled values,
   - a signal processing arrangement (36) comprising a memory in which the digitized sampled values are stored for creating a distance-dependent or travel-time-dependent amplitude profile of the measurement distance and which evaluates the amplitude profile for determining the travel time of the most probable useful echo signal,
   characterized in that
   - the evaluating circuit includes a frequency detector (37) connected in parallel with the signal processing path comprising the envelope circuit (32), said frequency detector (37) detecting an identity of the frequency of the reception signals with the transmitting frequency,
   - the signal processing path comprises a gate circuit (34) controlled by the output signal of the frequency detector (37), said gate circuit (34) being opened in dependence upon the result of the frequency detection by the frequency detector (37) only for those reception signals having a frequency corresponding to the transmitting frequency.

2. Filling level meter according to claim 1, characterized in that in the signal processing path a delay circuit (33) is inserted behind the connection point of the frequency detector (37) and ahead of the gate circuit (34).

3. Filling level meter according to claim 2, characterized in that the gate circuit (34) in the signal processing path lies behind the envelope circuit (32).

## Revendications

1. Appareil de mesure de niveau (20) destiné à mesurer le niveau de remplissage dans un réservoir (10), comportant un ensemble d'émission et de réception qui envoie des impulsions sonores ou ultrasonores sur la surface supérieure du produit de remplissage, et qui capte les impulsions rétrodiffusées (N) réfléchies par la surface supérieure du produit de remplissage, et les convertit en signaux électriques de réception, comportant également un circuit d'exploitation de données qui est raccordé à l'ensemble d'émission et de réception, et qui comprend dans un canal de traitement du signal (32-36), les éléments suivants:
   - un circuit de courbe-enveloppe (32), qui élabore un signal de courbe-enveloppe correspondant à la courbe-enveloppe des signaux de réception,
   - un convertisseur analogique-numérique (35), qui balaye périodiquement le signal de courbe-enveloppe et numérise ces valeurs de balayage,
   - un ensemble de traitement du signal (36), qui renferme une mémoire dans laquelle sont stockées les valeurs de balayage numérisées pour l'élaboration d'un profil d'amplitude de la distance mesurée en fonction de l'éloignement ou du temps de parcours, et qui exploite le profil d'amplitude pour déterminer la temps de parcours du signal d'écho utile le plus vraisemblable, caractérisé
   - en ce que dans le circuit d'exploitation des données, en parallèle au canal de traitement du signal renfermant le circuit de courbe-enveloppe (32), est prévu un détecteur de fréquence (37) qui détermine la concordance entre la fréquence des signaux de réception et la fréquence d'émission, et
   - en ce que dans le canal de traitement du signal est disposé un circuit de porte (34), qui est commandé par le signal de sortie du détecteur de fréquence (37), et qui, en fonction du résultat de la détection de fréquence du détecteur de fréquence (37), ne devient passant que pour les signaux de réception dont la fréquence correspond à la fréquence d'émission.

2. Appareil de mesure de niveau selon la revendication 1, caractérisé en ce que dans le canal de traitement du signal est inséré un circuit de temporisation (33), en aval du point de branchement du détecteur de fréquence (37) et en amont du circuit de porte (34).

3. Appareil de mesure de niveau selon la revendication 2, caractérisé en ce que dans le canal de traitement du signal, le circuit de porte (34) se trouve en aval du circuit de courbe-enveloppe (32).

# Fig. 1

Fig. 2

# Fig. 3